# EUROPEAN PATENT APPLICATION

(11) **EP 3 992 068 A1**
(43) Date of publication of application: **04.05.2022**
(21) Application number: 20837236.7
(22) Date of filing: 06.07.2020
(51) Int. Cl.: B62K 5/10

(54) **TILTING VEHICLE**

(30) Priority: 05.07.2019 WO PCT/JP2019/026907
(71) Applicant: Yamaha Hatsudoki Kabushiki Kaisha, Iwata-shi, Shizuoka 438-8501 (JP)
(72) Inventor: NAGATA, Tatsuya, Iwata-shi, Shizuoka 438-8501 (JP); HARA, Nobuo, Iwata-shi, Shizuoka 438-8501 (JP)
(74) Representative: Stöckeler, Ferdinand
(86) International application number: PCT/JP2020/026398
(87) International publication number: WO 2021/006241

(57) **Abstract**

Provided is a leaning vehicle capable of backward traveling, the leaning vehicle including a pair of left and right steerable front wheels and a lean actuator for leaning a vehicle body. A control device controls the lean actuator such that when the left steerable front wheel and the right steerable front wheel are steered in a left direction based on a manipulation on a turning manipulation input device while the leaning vehicle is traveling straight backward with the vehicle body being upright, leaning vehicle turns in the left direction with a front portion of the leaning vehicle moving in a right direction more than a rear portion of the leaning vehicle while the leaning vehicle is traveling backward with the vehicle body kept upright. The control device controls the lean actuator such that when the left steerable front wheel and the right steerable front wheel are steered in the right direction based on a manipulation on the turning manipulation input device while the leaning vehicle is traveling straight backward with the vehicle body being upright, the leaning vehicle turns in the right direction with the front portion of the leaning vehicle moving in the left direction more than the rear portion of the leaning vehicle while the leaning vehicle is traveling backward with the vehicle body kept upright.

## Description

### Technical Field

The present teaching relates to a leaning vehicle, and more specifically relates to a leaning vehicle including a pair of left and right steerable front wheels and a lean actuator for leaning a vehicle body.

### Background Art

Conventionally known is a leaning vehicle including a pair of left and right steerable front wheels and a lean actuator for leaning a vehicle body. A leaning vehicle of this type is disclosed, for example, in WO2017/82424.

### Citation List

### Patent Literature

PTL 1: WO2017/82424

### Summary of Invention

### Technical Problem

It is also desired that the leaning vehicle, according to the Literature above, is capable of backward traveling.

The present teaching aims to provide a leaning vehicle capable of backward traveling, the leaning vehicle including a pair of left and right steerable front wheels and a lean actuator for leaning a vehicle body.

### Solution to the Problem

The inventors of the present application conducted studies on a difference between a case where a leaning vehicle, like the above-described one including a pair of left and right steerable front wheels, travels in a forward direction and a case where the leaning vehicle travels in a backward direction. The inventors consequently found the following: in the case where the leaning vehicle including the pair of left and right steerable front wheels travels in the backward direction, unlike the case of traveling in the forward direction, the pair of wheels located in a rear portion of the vehicle with respect to a traveling direction of the leaning vehicle are steered, and therefore a behavior of the leaning vehicle at a time of turning differs between the case of forward traveling and the case of backward traveling; and when the leaning vehicle turns while traveling in the backward direction, it is preferable for a rider of the leaning vehicle to keep the leaning vehicle upright. This knowledge was not obtained until the inventors of the present application conducted the studies. The present teaching is accomplished based on such knowledge.

A leaning vehicle according to an embodiment of the present teaching is a leaning vehicle configured to, while traveling forward, turn in a left direction with a vehicle body leaning in the left direction and turn in a right direction with the vehicle body leaning in the right direction. The leaning vehicle includes a left steerable front wheel, a right steerable front wheel, a rear wheel, a lean actuator, and a control device. The left steerable front wheel and the right steerable front wheel are steered based on a manipulation on a turning manipulation input device. The rear wheel is incapable of being steered by a manipulation on the turning manipulation input device. The lean actuator leans the vehicle body. The control device controls the lean actuator based on a manipulation on the turning manipulation input device. The control device controls the lean actuator such that when the left steerable front wheel and the right steerable front wheel are steered in the left direction based on a manipulation on the turning manipulation input device while the leaning vehicle is traveling straight backward with the vehicle body being upright, the leaning vehicle turns in the left direction with a front portion of the leaning vehicle moving in the right direction more than a rear portion of the leaning vehicle while the leaning vehicle is traveling backward with the vehicle body kept upright. The control device controls the lean actuator such that when the left steerable front wheel and the right steerable front wheel are steered in the right direction based on a manipulation on the turning manipulation input device while the leaning vehicle is traveling straight backward with the vehicle body being upright, the leaning vehicle turns in the right direction with the front portion of the leaning vehicle moving in the left direction more than the rear portion of the leaning vehicle while the leaning vehicle is traveling backward with the vehicle body kept upright.

In the foregoing leaning vehicle, the vehicle body can be kept upright not only when the leaning vehicle travels straight backward but also when the leaning vehicle turns while traveling backward. This helps a rider of the leaning vehicle in grasping a behavior of the leaning vehicle even when the leaning vehicle is turning while traveling backward. Consequently, it is easy to make the leaning vehicle turn while traveling backward.

The leaning vehicle according to the embodiment of the present teaching may be either a straddled type leaning vehicle where a rider sits astraddle a seat or a sit-in type leaning vehicle where a rider sits without straddling a seat.

In the leaning vehicle according to the embodiment of the present teaching, the "leaning vehicle configured to, while traveling forward, turn in a left direction with a vehicle body leaning in the left direction and turn in a right direction with the vehicle body leaning in the right direction" may be any of a "leaning vehicle configured to, while traveling forward, turn in the left direction with the vehicle body leaning in the left direction and turn in the right direction with the vehicle body leaning in the right direction, in the entire vehicle speed region", a "leaning vehicle configured to, while traveling forward, turn in the left direction with the vehicle body leaning in the left direction and turn in the right direction with the vehicle body leaning in the right direction, no matter what a vehicle speed of the leaning vehicle is", and a "leaning vehicle configured to, while traveling forward, turn in the left direction with the vehicle body leaning in the left direction and turn in the right direction with the vehicle body leaning in the right direction, in vehicle speed regions excluding a specified vehicle speed region". Here, the specified vehicle speed region is a low vehicle speed region, for example. The low vehicle speed region is a vehicle speed region including the lowest speed among two or more vehicle speed regions into which the entire vehicle speed region, that is, the vehicle speed region ranging from zero to the maximum speed, is divided, for example. It may also be a "leaning vehicle configured to turn in the left direction with the vehicle body leaning in the left direction and turn in the right direction with the vehicle body leaning in the right direction, in at least a part of a period during which the leaning vehicle travels forward".

In the leaning vehicle according to the embodiment of the present teaching, the turning manipulation input device is just required to be capable of receiving a manipulation that the rider performs in order to turn the leaning vehicle, for example. The wording "the left steerable front wheel and the right steerable front wheel are steered based on a manipulation on the turning manipulation input device" encompasses a situation where the left steerable front wheel and the right steerable front wheel are steered as a result of a manipulation on the turning manipulation input device being mechanically transmitted to the left steerable front wheel and the right steerable front wheel. In this situation, an actuator that is driven based on a manipulation on the turning manipulation input device may be provided, and an output of the actuator may be transmitted to the left steerable front wheel and the right steerable front wheel. In other words, a manipulation on the turning manipulation input device that is mechanically transmitted to the left steerable front wheel and the right steerable front wheel may be assisted by the actuator. The wording "the left steerable front wheel and the right steerable front wheel are steered based on a manipulation on the turning manipulation input device" encompasses a situation where a manipulation on the turning manipulation input device is detected by a sensor, and based on a result of the detection, the left steerable front wheel and the right steerable front wheel are steered by an actuator. That is, the turning manipulation input device may be configured such that a manipulation performed by the rider of the leaning vehicle is not mechanically transmitted to the left steerable front wheel and the right steerable front wheel and thus does not cause the left steerable front wheel and the right steerable front wheel to be steered.

In the leaning vehicle according to the embodiment of the present teaching, the lean actuator is just required to have an output member that is mechanically connected to the vehicle body, for example. The wording "an output member that is mechanically connected to the vehicle body" means that power transmission from the output member to the vehicle body is allowed. The lean actuator is, for example, an electric motor having an output member capable of rotating in a normal direction and a reverse direction. It may be possible that, when the lean actuator leans the vehicle body, the left and right steerable front wheels and the rear wheel lean together with the vehicle body, for example.

In the leaning vehicle according to the embodiment of the present teaching, the control device is an ECU (Electric Control Unit), for example. The ECU is implemented by, for example, a combination of an IC (Integrated Circuit), an electronic component, a circuit board, and the like. A control performed by the control device is implemented by, for example, a CPU (Central Processing Unit) reading out a program stored in a non-volatile memory and executing a predetermined process in accordance with the program.

In the leaning vehicle according to the embodiment of the present teaching, the wording "the leaning vehicle ... with the vehicle body being upright" means a state where the vehicle body is substantially upright for the rider of the leaning vehicle. The state where "the leaning vehicle ... with the vehicle body being upright" may be established if the actual lean angle of the vehicle body is within ±3 degrees. The actual lean angle of the vehicle body is preferably within ±2 degrees. The actual lean angle of the vehicle body is more preferably within ±1. The wording "controls the lean actuator such that ... the leaning vehicle is ... with the vehicle body kept upright" may be a control having a target value within ±3 degrees in making the vehicle body upright. Even when the target value in making the vehicle body upright is ±0 degrees, the actual lean angle of the vehicle body may sometimes be ±3 degrees depending on the accuracy of a sensor for detecting the lean angle of the vehicle body and/or the accuracy of the lean actuator. Such a case is also encompassed by the wording "controls the lean actuator such that ... the leaning vehicle is ... with the vehicle body kept upright".

In the leaning vehicle according to the embodiment of the present teaching, the wording "the leaning vehicle turns in the left direction with the front portion of the leaning vehicle moving in the right direction more than the rear portion of the leaning vehicle" means a situation where "while the leaning vehicle is turning in the left direction, the amount by which the front portion of the leaning vehicle moves in the right direction is larger than the amount by which the rear portion of the leaning vehicle moves in the right direction". The wording "the leaning vehicle turns in the right direction with the front portion of the leaning vehicle moving in the left direction more than the rear portion of the leaning vehicle while the leaning vehicle is traveling backward with the vehicle body kept upright" means a situation where "while the leaning vehicle is turning in the right direction, the amount by which the front portion of the leaning vehicle moves in the left direction is larger than the amount by which the rear portion of the leaning vehicle moves in the left direction".

In the leaning vehicle according to the embodiment of the present teaching, the control device may control the lean actuator such that when the left steerable front wheel and the right steerable front wheel are steered in the left direction based on a manipulation on the turning manipulation input device while the leaning vehicle is traveling straight backward with the vehicle body being upright, the leaning vehicle turns in the left direction with the front portion of the leaning vehicle moving in the right direction more than the rear portion of the leaning vehicle while the leaning vehicle is traveling backward with the vehicle body kept upright no matter what a vehicle speed of the leaning vehicle is. The control device may control the lean actuator such that when the left steerable front wheel and the right steerable front wheel are steered in the right direction based on a manipulation on the turning manipulation input device while the leaning vehicle is traveling straight backward with the vehicle body being upright, the leaning vehicle turns in the right direction with the front portion of the leaning vehicle moving in the left direction more than the rear portion of the leaning vehicle while the leaning vehicle is traveling backward with the vehicle body kept upright no matter what a vehicle speed of the leaning vehicle is.

The above-described aspect makes it easy for the leaning vehicle to turn while traveling backward over the entire vehicle speed region in traveling backward. For example, the leaning vehicle can easily turn while traveling backward even in a case where a vehicle speed region in traveling backward is set lower than a vehicle speed region in traveling forward.

In the leaning vehicle according to the embodiment of the present teaching, the control device may control the lean actuator so as to have an upward-downward direction of the leaning vehicle closer to verticalness, when the leaning vehicle is present on a road surface that has an incline in a left-right direction of the leaning vehicle.

In the above-described aspect, the state of the vehicle body can be controlled with the inclination of the road surface taken into account.

In the leaning vehicle according to the embodiment of the present teaching, a position at which a steering axis of the left steerable front wheel and a steering axis of the right steerable front wheel intersect a road surface may be located farther in a forward direction than a position at which each of the left steerable front wheel and the right steerable front wheel is in contact with the road surface.

These and other objects, features, aspects and advantages of the present teaching will become apparent from the following detailed description, which, taken in conjunction with the accompanying drawings, discloses some embodiments of the present teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

### Advantageous Effects of Invention

According to the present teaching, a leaning vehicle capable of backward traveling can be provided, the leaning vehicle including a pair of left and right steerable front wheels and a lean actuator for leaning a vehicle body.

### Brief Description of Drawings

[FIG. 1] A diagram showing a left view of a leaning vehicle according to an embodiment of the present teaching as well as a block diagram of a leaning control system included in the leaning vehicle.
[FIG. 2] A flowchart showing an operation control on a lean actuator, which is performed by a control device.
[FIG. 3] An illustrative diagram for illustrating a lean angle of a vehicle body in a case where a road surface is inclined in a left-right direction of the leaning vehicle.

### Description of Embodiments

In the following, details of a leaning vehicle according to an embodiment of the present teaching will be described with reference to the drawings. The embodiment described below is just an example. The present teaching should never be construed in a limited way by the embodiment described below.

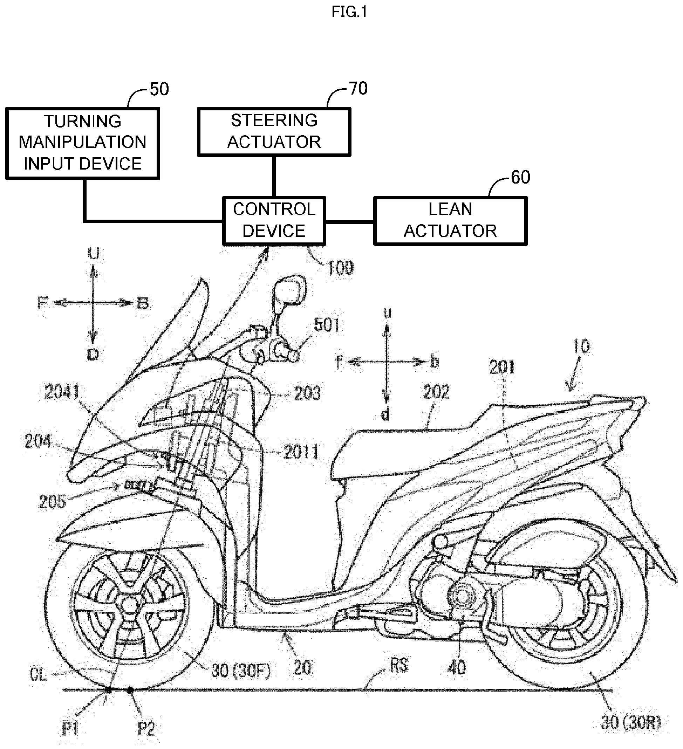

Referring to FIG. 1, a leaning vehicle 10 according to the embodiment of the present teaching will be described. FIG. 1 is a diagram showing a left view of the leaning vehicle 10 as well as a block diagram of a leaning control system included in the leaning vehicle 10.

In this Description, various directions in relation to the leaning vehicle 10 are defined as follows.

The forward (front) direction of the leaning vehicle 10 is defined as forward direction F. The backward (rear) direction of the leaning vehicle 10 is defined as backward direction B. The left direction of the leaning vehicle 10 is defined as left direction L. The right direction of the leaning vehicle 10 is defined as right direction R. The upward (upper) direction of the leaning vehicle 10 is defined as upward direction U. The downward (lower) direction of the leaning vehicle 10 is defined as downward direction D. The forward-backward (front-rear) direction of the leaning vehicle 10 is defined as forward-backward direction FB. The left-right direction of the leaning vehicle 10 is defined as left-right direction LR. The upward-downward (up-down) direction of the leaning vehicle 10 is defined as upward-downward direction UD. It should be noted that forward, backward, upward, downward, left, and right of the leaning vehicle 10 are forward, backward, upward, downward, left, and right as viewed by a rider sitting on a seat 202 of the leaning vehicle 10.

In the leaning vehicle 10, the forward (front) direction of a vehicle body 20 is defined as forward direction f. The backward (rear) direction of the vehicle body 20 is defined as backward direction b. The left direction of the vehicle body 20 is defined as left direction l. The right direction of the vehicle body 20 is defined as right direction r. The upward (upper) direction of the vehicle body 20 is defined as upward direction u. The downward (lower) direction of the vehicle body 20 is defined as downward direction d. The forward-backward (front-rear) direction of the vehicle body 20 is defined as forward-backward direction fb. The left-right direction of the vehicle body 20 is defined as left-right direction lr. The upward-downward (up-down) direction of the vehicle body 20 is defined as upward-downward direction ud.

In the leaning vehicle 10, the vehicle body 20 is able to lean in the left direction L or the right direction R. When the vehicle body 20 leans in the left direction L or the right direction R, the upward-downward direction ud and the left-right direction lr of the vehicle body 20 are not coincident with the upward-downward direction UD and the left-right direction LR of the leaning vehicle 10, respectively. When the vehicle body 20 is upright, the upward-downward direction ud and the left-right direction lr of the vehicle body 20 are coincident with the upward-downward direction UD and the left-right direction LR of the leaning vehicle 10.

The leaning vehicle 10, in forward traveling, turns in the left direction L with the vehicle body 20 leaning in the left direction L, and turns in the right direction R with the vehicle body 20 leaning in the right direction R. The leaning vehicle 10 includes the vehicle body 20, plural wheels 30, a power unit 40, a turning manipulation input device 50, a lean actuator 60, a steering actuator 70, and a control device 100. These will be described below.

The vehicle body 20 leans in the left direction L when the leaning vehicle 10 turns in the left direction L, and leans in the right direction R when the leaning vehicle 10 turns in the right direction R. The vehicle body 20 includes a vehicle body frame 201 and the seat 202.

The vehicle body frame 201 supports the power unit 40. The power unit 40 includes an engine as a drive source, a transmission, and the like. The drive source may be either an electric motor or a combination of an engine and an electric motor. The seat 202 is where the rider of the leaning vehicle 10 sits.

The vehicle body frame 201 includes a head pipe 2011. The head pipe 2011 receives a steering shaft 203 therein. The steering shaft 203 is not mechanically connected to a handlebar 501. Thus, a turning manipulation that the rider performs on the handlebar 501 is not mechanically transmitted to the steering shaft 203.

The vehicle body 20 supports the plural wheels 30. The plural wheels 30 lean in the left direction L together with the vehicle body 20 when the leaning vehicle 10 turns in the left direction L, and lean in the right direction R together with the vehicle body 20 when the leaning vehicle 10 turns in the right direction R. The plural wheels 30 include a pair of left and right steerable front wheels 30F and a rear wheel 30R.

The pair of left and right steerable front wheels 30F comprises a left steerable front wheel and a right steerable front wheel, which are arranged side by side in the left-right direction LR. The pair of left and right steerable front wheels 30F is steered by the rider of the leaning vehicle 10 manipulating the turning manipulation input device 50. When viewed in the left direction L or the right direction R of the leaning vehicle 10, a position P1, at which a steering central axis line CL of the pair of left and right steerable front wheels 30F intersects a road surface RS, is located farther in the forward direction than a position P2 at which each of the left and right paired steerable front wheels 30F is in contact with the road surface RS. The pair of left and right steerable front wheels 30F leans in the left direction L together with the vehicle body 20 when the leaning vehicle 10 turns in the left direction L, and leans in the right direction R together with the vehicle body 20 when the leaning vehicle 10 turns in the right direction R. A lean mechanism 2041 for leaning the pair of left and right steerable front wheels 30F is a lean mechanism that adopts a parallelogram link system, for example. The pair of left and right steerable front wheels 30F is supported by the vehicle body frame 201 via a suspension device 204 including the lean mechanism 2041.

The rear wheel 30R is disposed farther in the backward direction with respect to the forward-backward direction FB than the pair of left and right steerable front wheels 30F. The rear wheel 30R leans in the left direction L together with the vehicle body 20 when the leaning vehicle 10 turns in the left direction L, and leans in the right direction R together with the vehicle body 20 when the leaning vehicle 10 turns in the right direction R. The rear wheel 30 is supported by the vehicle body frame 201 via a swing arm. The rear wheel 30 is rotated by receiving power from the power unit 40. This causes the leaning vehicle 10 to travel. The rear wheel 30R is not steered even though the rider of the leaning vehicle 10 manipulates the turning manipulation input device 50.

The turning manipulation input device 50 is manipulated by the rider of the leaning vehicle 10 in order to turn the leaning vehicle 10. The turning manipulation input device 50 includes the handlebar 501 as a manipulated member that the rider can manipulate.

The turning manipulation input device 50 is configured such that a turning manipulation performed by the rider of the leaning vehicle 10 is not mechanically transmitted to the pair of left and right steerable front wheels 30F and thus does not cause the pair of left and right steerable front wheels 30F to be steered about the central axis line CL1. More specifically, the handlebar 501 is not mechanically connected to the pair of left and right steerable front wheels 30F. That is, no power is transmitted from the handlebar 501 to the pair of left and right steerable front wheels 30F.

The turning manipulation input device 50, for example, detects a direction of a manipulation on the handlebar 501 and the amount of the manipulation on the handlebar 501, and inputs the detected direction and amount of the manipulation on the handlebar 501 to the control device 100. For the detection of the direction and amount of the manipulation on the handlebar 501, an encoder or the like is used, for example.

The lean actuator 60 leans the vehicle body 20. The lean actuator 60 is, for example, an electric motor capable of rotating an output member in a normal direction and a reverse direction, the output member being mechanically connected to a member included in the lean mechanism 2041.

The lean actuator 60 applies a torque to the member included in the lean mechanism 2041, based on a turning manipulation received by the turning manipulation input device 50. The member to which the torque is applied by the lean actuator 60 rotates relative to the vehicle body frame 201. This involves an operation of the lean mechanism 2041. Accordingly, the left and right paired steerable front wheels 30F change their respective positions relative to the vehicle body frame 201 with respect to the upward-downward direction ud. Consequently, the vehicle body frame 201 leans in the left direction L or the right direction R. That is, the vehicle body 20 leans in the left direction L or the right direction R.

The steering actuator 70 steers each of the left and right paired steerable front wheels 30F, based on a manipulation that the rider of the leaning vehicle 10 performs on the turning manipulation input device 50. The steering actuator 70, for example, rotates an output member that is mechanically connected to the steering shaft 203. The steering actuator 70 is, for example, an electric motor capable of rotating the output member mechanically connected to the steering shaft 203 in a normal direction and a reverse direction.

The steering actuator 70 rotates the steering shaft 203 based on a turning manipulation received by the turning manipulation input device 50. The rotation of the steering shaft 203 is transmitted to the pair of left and right steerable front wheels 30F via a tie rod 205. As a result, each of the left and right paired steerable front wheels 30F is steered. The steering actuator 70 may also be used as a damper for suppressing swinging of the pair of left and right steerable front wheels 30F in the left-right direction LR while the leaning vehicle 10 is traveling in the backward direction.

The leaning vehicle 10 is configured to be capable of backward traveling. For example, the engine included in the power unit 40 serves as a backward traveling drive source that outputs power for causing backward traveling of the leaning vehicle 10. With this configuration, the power of the backward traveling drive source is transmitted to the rear wheel 30R via a backward traveling power transmission mechanism. Used as the backward traveling power transmission mechanism is a part of a forward traveling power transmission mechanism that transmits engine power to the rear wheel 30R in forward traveling of the leaning vehicle 10.

The control device 100 controls the lean actuator 60 and the steering actuator 70 based on a manipulation on the turning manipulation input device 50. In response to a situation where the pair of left and right steerable front wheels 30F is steered in the left direction L based on a manipulation on the turning manipulation input device 50 while the leaning vehicle 10 is traveling straight backward with the vehicle body 20 being upright, the control device 100 controls the lean actuator 60 such that the leaning vehicle 10 turns in the left direction L with a front portion of the leaning vehicle 10 moving in the right direction R more than a rear portion of the leaning vehicle 10 while the leaning vehicle 10 is traveling backward with the vehicle body 20 kept upright. In response to a situation where the pair of left and right steerable front wheels 30F is steered in the right direction R based on a manipulation on the turning manipulation input device 50 while the leaning vehicle 10 is traveling straight backward with the vehicle body 20 being upright, the control device 100 controls the lean actuator 60 such that the leaning vehicle 10 turns in the right direction R with the front portion of the leaning vehicle 10 moving in the left direction L more than the rear portion of the leaning vehicle 10 while the leaning vehicle 10 is traveling backward with the vehicle body 20 kept upright. Here, it may be possible that the control device 100 keeps the vehicle body 20 upright in the entire vehicle speed region while the leaning vehicle 10 is traveling backward.

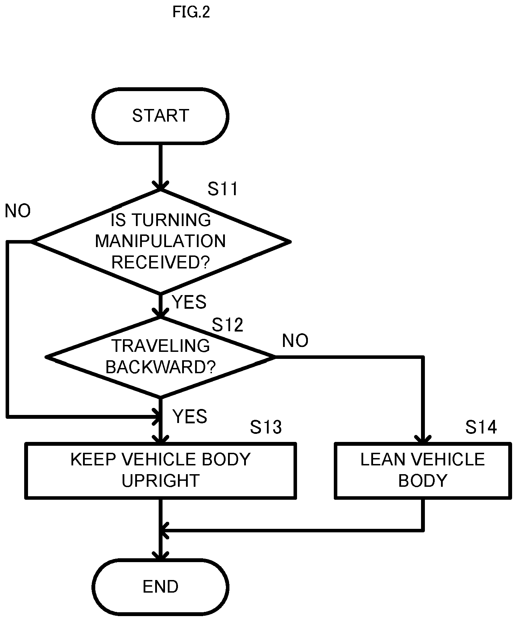

An operation control on the lean actuator 60, which is performed by the control device 100, will be described with reference to FIG. 2. FIG. 2 is a flowchart showing the operation control on the lean actuator 60, which is performed by the control device 100.

First, in step S11, the control device 100 determines whether or not the turning manipulation input device 50 is manipulated by the rider of the leaning vehicle 10. If the turning manipulation input device 50 is manipulated by the rider of the leaning vehicle 10 (step S11: YES), the control device 100 determines whether or not the leaning vehicle 10 is traveling backward (step S12). If the leaning vehicle 10 is traveling backward (step S12: YES), the control device 100 controls the lean actuator 60 so as to keep the vehicle body 20 upright (step S13). Then, the control device 100 terminates the control.

If the turning manipulation input device 50 is not manipulated by the rider of the leaning vehicle 10 (step S11: NO), the control device 100 executes the processing of step S13 and subsequent steps. If the leaning vehicle 10 is not traveling backward (step S12: NO), the control device 100 controls the lean actuator 60 so as to lean the vehicle body 20 based on the manipulation on the turning manipulation input device 50 (step S14). Then, the control device 100 terminates the control.

In the leaning vehicle 10, the vehicle body 20 can be kept upright not only when the leaning vehicle 10 travels straight backward but also when the leaning vehicle 10 turns while traveling backward. This helps the rider of the leaning vehicle 10 in grasping a behavior of the leaning vehicle 10 even when the leaning vehicle 10 is turning while traveling backward. Consequently, it is easy to make the leaning vehicle 10 turn while traveling backward.

### (Variation 1 of Leaning Vehicle 10)

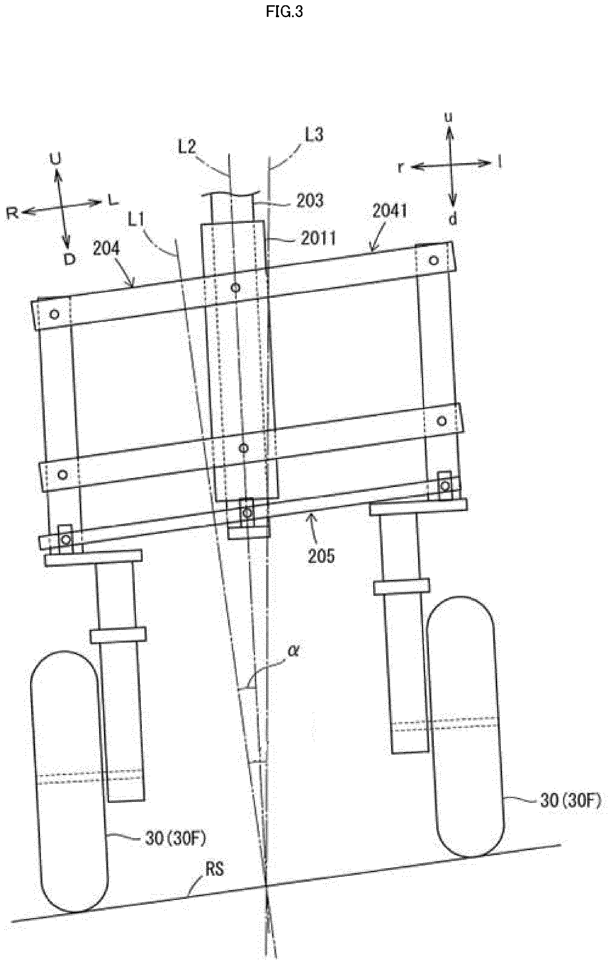

A variation of the leaning vehicle 10 will be described with reference to FIG. 3. FIG. 3 is an illustrative diagram for illustrating a lean angle α of the vehicle body 20 in a case where the road surface RS is inclined in the left-right direction LR of the leaning vehicle 10.

In the variation, the control device 100 controls the lean actuator 60 so as to have the upward-downward direction UD of the leaning vehicle 10 closer to verticalness, when the leaning vehicle 10 is present on the road surface RS that has an incline in the left-right direction LR of the leaning vehicle 10. In FIG. 3, the straight line L1 indicates a straight line perpendicular to the road surface RS, the straight line L2 indicates a straight line extending in the upward-downward direction UD of the vehicle body 20, and the straight line L3 indicates a straight line extending in the vertical direction.

In the variation, the vehicle body 20 can be caused to lean with the inclination of the road surface taken into account.

### (Other Embodiments)

The embodiment and variation, of which at least either one of description or illustration has been given herein, are for ease of understanding the present disclosure, and not for limiting the concept of the present disclosure. The foregoing embodiment and variation may be altered and/or adapted without departing from the spirit of the present disclosure.

The spirit encompasses equivalent elements, modifications, omissions, combinations (for example, a combination of a feature of the embodiment and a feature of any variation), adaptations and/or alterations as would be appreciated by those skilled in the art based on the embodiment disclosed herein. The limitations in Claims are to be interpreted broadly based on the language employed in Claims and not limited to embodiments and variations described herein or during the prosecution of the present application. The embodiments and variations are to be construed as non-exclusive. For example, in this Description, the terms "preferably", "may", and "possible" are non-exclusive and mean "preferably, but not limited to", "may, but not limited to", and "possibly, but not limited to", respectively.

For example, in the foregoing embodiment, the turning manipulation input device 50 may be configured such that a manipulation performed by the rider of the leaning vehicle 10 is mechanically transmitted to the pair of left and right steerable front wheels 30F and thus steers the pair of left and right steerable front wheels 30F. In such a configuration, a manipulation on the turning manipulation input device 50 that is mechanically transmitted to the pair of left and right steerable front wheels 30F may be assisted by an actuator.

### Reference Signs List

- 10: leaning vehicle
- 20: vehicle body
- 30F: steerable front wheel
- 30R: rear wheel
- 50: turning manipulation input device
- 60: lean actuator
- 100: control device
- RS: road surface
- P1: position
- P2: position
- CL: steering central axis line

## Claims

1. A leaning vehicle configured to, while traveling forward, turn in a left direction with a vehicle body leaning in the left direction and turn in a right direction with the vehicle body leaning in the right direction, the leaning vehicle comprising:
a left steerable front wheel and a right steerable front wheel that are steered based on a manipulation on a turning manipulation input device;
a rear wheel that is incapable of being steered by a manipulation on the turning manipulation input device;
a lean actuator that leans the vehicle body; and
a control device that controls the lean actuator based on a manipulation on the turning manipulation input device,
the control device being configured to control the lean actuator such that when the left steerable front wheel and the right steerable front wheel are steered in the left direction based on a manipulation on the turning manipulation input device while the leaning vehicle is traveling straight backward with the vehicle body being upright, the leaning vehicle turns in the left direction with a front portion of the leaning vehicle moving in the right direction more than a rear portion of the leaning vehicle while the leaning vehicle is traveling backward with the vehicle body kept upright,
the control device being configured to control the lean actuator such that when the left steerable front wheel and the right steerable front wheel are steered in the right direction based on a manipulation on the turning manipulation input device while the leaning vehicle is traveling straight backward with the vehicle body being upright, the leaning vehicle turns in the right direction with the front portion of the leaning vehicle moving in the left direction more than the rear portion of the leaning vehicle while the leaning vehicle is traveling backward with the vehicle body kept upright.

2. The leaning vehicle according to claim 1, wherein
the control device controls the lean actuator such that when the left steerable front wheel and the right steerable front wheel are steered in the left direction based on a manipulation on the turning manipulation input device while the leaning vehicle is traveling straight backward with the vehicle body being upright, the leaning vehicle turns in the left direction with the front portion of the leaning vehicle moving in the right direction more than the rear portion of the leaning vehicle while the leaning vehicle is traveling backward with the vehicle body kept upright no matter what a vehicle speed of the leaning vehicle is, and
the control device controls the lean actuator such that when the left steerable front wheel and the right steerable front wheel are steered in the right direction based on a manipulation on the turning manipulation input device while the leaning vehicle is traveling straight backward with the vehicle body being upright, the leaning vehicle turns in the right direction with the front portion of the leaning vehicle moving in the left direction more than the rear portion of the leaning vehicle while the leaning vehicle is traveling backward with the vehicle body kept upright no matter what a vehicle speed of the leaning vehicle is.

3. The leaning vehicle according to claim 1 or 2, wherein
the control device controls the lean actuator so as to have an upward-downward direction of the leaning vehicle closer to verticalness, when the leaning vehicle is present on a road surface that has an incline in a left-right direction of the leaning vehicle.

4. The leaning vehicle according to any one of claims 1 to 3, wherein
a position at which a steering axis of the left steerable front wheel and a steering axis of the right steerable front wheel intersect a road surface are located farther in a forward direction than a position at which each of the left steerable front wheel and the right steerable front wheel is in contact with the road surface.
